# EUROPEAN PATENT APPLICATION

(11) **EP 4 761 313 A1**
(43) Date of publication of application: **17.06.2026**
(21) Application number: 23958503.7
(22) Date of filing: 13.11.2023
(51) Int. Cl.: H04W 12/0433

(54) **KEY UPDATING METHOD AND DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN); XIONG, Lihui, Dongguan, Guangdong 523860 (CN)
(74) Representative: Penza, Giancarlo
(86) International application number: PCT/CN2023/131333
(87) International publication number: WO 2025/102217

(57) **Abstract**

The present application relates to a key updating method and a device. The method comprises: a first communication device receives first information, the first information being used for indicating one or more pieces of first key information, and the one or more pieces of first key information comprising information required for updating a key of the first communication device; and the first communication device determines a key updating method on the basis of the first information. By means of the embodiments of the present application, keys can be updated more flexibly on the basis of one or more pieces of first key information.

## Description

### TECHNICAL FIELD

The present disclosure relates to the field of communications, and more particularly, to a key updating method and device.

### BACKGROUND

In order to further reduce handover latency and ensure service continuity, the 3rd generation partnership project (3GPP) Release 18 (R18) supports a handover process triggered based on Layer 1/Layer 2 (L1/L2), that is, a L1/L2 triggered mobility (LTM) handover. The LTM allows a UE to continuously switch among configured candidate cells. Before introducing the LTM, a traditional handover process only supported a switching of user equipment (UE) once, and key updating was also only performed once.

### SUMMARY

Embodiments of the present disclosure provide a key updating method and device, which can perform key updating more flexibly.

An embodiment of the present disclosure provides a key updating method, which includes the following operations:
a first communication device receives first information, where the first information indicates one or more pieces of first key information including information required for key updating of the first communication device; and
the first communication device determines a key updating manner based on the first information.

An embodiment of the present disclosure provides a key updating method, which includes the following operations:
a second communication device transmits first information, where the first information indicates one or more pieces of first key information including information required for key updating of a first communication device.

An embodiment of the present disclosure provides a first communication device, which includes a receiving unit and a processing unit.

The receiving unit is configured to receive first information, where the first information indicates one or more pieces of first key information including information required for key updating of the first communication device.

The processing unit is configured to determine a key updating manner based on the first information.

An embodiment of the present disclosure provides a second communication device, which includes a transmission unit.

The transmission unit is configured to transmit first information, where the first information indicates one or more pieces of first key information including information required for key updating of a first communication device.

An embodiment of the present disclosure provides a terminal device, which includes a transceiver, a processor, and a memory. The memory is configured to store a computer program, the transceiver is configured to communicate with another device, and the processor is configured to call and run the computer program stored in the memory to cause the terminal device to perform the above-described key updating method.

An embodiment of the present disclosure provides a network device, which includes a transceiver, a processor, and a memory. The memory is configured to store a computer program, the transceiver is configured to communicate with another device, and the processor is configured to call and run the computer program stored in the memory to cause the network device to perform the above-described key updating method.

According to the embodiment of the present disclosure, the communication device can perform key updating more flexibly based on the received one or more pieces of first key information.

### BRIEF DESCRIPTION OF DRAWINGS

FIG. 1 is a schematic diagram of an application scenario according to an embodiment of the present disclosure.
FIG. 2 is an example diagram of a specific flow of LTM.
FIG. 3 is a schematic diagram of security key derivation during a handover procedure.
FIG. 4 is another schematic diagram of security key derivation during a handover procedure.
FIG. 5 is a schematic flowchart of a key updating method according to an embodiment of the present disclosure.
FIG. 6 is a schematic flowchart of a key updating method according to another embodiment of the present disclosure.
FIG. 7 is a schematic flowchart of a key updating method according to an embodiment of the present disclosure.
FIG. 8 is a schematic flowchart of a key updating method according to another embodiment of the present disclosure.
FIG. 9 is a schematic flowchart of a key updating including a new NCC.
FIG. 10 and FIG. 11 are schematic flowcharts of a key updating including a new NCC.
FIG. 12 is a schematic block diagram of a first communication device according to an embodiment of the present disclosure.
FIG. 13 is a schematic block diagram of a second communication device according to an embodiment of the present disclosure.
FIG. 14 is a schematic block diagram of a second communication device according to another embodiment of the present disclosure.
FIG. 15 is a schematic block diagram of a communication device according to an embodiment of the present disclosure.
FIG. 16 is a schematic block diagram of a chip according to an embodiment of the present disclosure.
FIG. 17 is a schematic block diagram of a communication system according to an embodiment of the present disclosure.

### DETAILED DESCRIPTION

The technical solutions in the embodiments of the present disclosure will be described below with reference to the drawings in the embodiments of the present disclosure.

The technical solutions in the embodiments of the present disclosure can be applied to various communication systems, such as a long term evolution (LTE) system, an advanced long term evolution (LTE-A) system, a new radio (NR) system, an evolution system of an NR system, a LTE-based access to unlicensed spectrum (LTE-U) system, a NR-based access to unlicensed spectrum (NR-U) system, an non-terrestrial network (NTN) system, a universal mobile telecommunication system (UMTS), a wireless local area network (WLAN) system, a wireless fidelity (WIFI) system, a 5th-generation (5G) system, or other communication systems.

Generally speaking, a conventional communication system supports a limited number of connections and is easy to implement. However, with the development of communication technology, the mobile communication system will support not only the conventional communication, but also, for example, device-to-device (D2D) communication, machine-to-machine (M2M) communication, machine type communication (MTC), vehicle-to-vehicle (V2V) communication, vehicle-to-everything (V2X) communication, or the like. The embodiments of the present disclosure can also be applied to these communication systems.

In an embodiment, the communication system in the embodiment of the present disclosure may be applied to a carrier aggregation (CA) scenario, a dual connection (DC) scenario, or a stand-alone (SA) network layout scenario.

In an embodiment, the communication system in the embodiment of the present disclosure may be applied to an unlicensed spectrum, where the unlicensed spectrum may also be considered as a shared spectrum. Alternatively, the communication system in the embodiment of the present disclosure may also be applied to a licensed spectrum, where the licensed spectrum may also be regarded as a non-shared spectrum (or a dedicated spectrum).

The embodiments of the present disclosure describe various implementations in conjunction with a network device and a terminal device. The terminal device may also be referred to as a user equipment (UE), an access terminal, a subscriber unit, a subscriber station, a mobile station, a mobile platform, a remote station, a remote terminal, a mobile device, a user terminal, a terminal, a wireless communication device, a user agent, a user device, or the like.

The terminal device may be a station in a WLAN, a cellular phone, a cordless phone, a SIP phone, a WLL station, a PDA device, a handheld device with wireless communication functionality, a computing device or another processing device connected to a wireless modem, an in-vehicle device, a wearable device, a terminal device in a next generation communication system such as an NR network, or a terminal device in a future evolved PLMN network, or the like.

In an embodiment of the present disclosure, the terminal device may be deployed on land, including indoor or outdoor, handheld, wearable, or vehicle-mounted; or it can also be deployed on the water (such as ships, etc.); or it can also be deployed in the air (e.g., on aircraft, balloons and satellites, etc.).

In an embodiment of the present disclosure, the terminal device may be a mobile phone, a tablet computer, a computer with a wireless transceiver function, a VR terminal device, an AR terminal device, or may be a wireless terminal device in industrial control, unmanned driving, telemedicine, a smart grid, transportation security, a smart city, or a smart home, or the like. As an example and not limitation, in an embodiment of the present disclosure, the terminal device may also be a wearable device. Wearable devices can also be called wearable smart devices, which are a general term for wearable devices that are developed by applying wearable technology to intelligently design daily wearable devices, such as glasses, gloves, watches, clothing and shoes.

In an embodiment of the present disclosure, the network device may be a device for communicating with a mobile device. The network device may be an AP in a WLAN, an evolved Node B (eNB or eNodeB), a relay station or an access point in LTE, a vehicle-mounted device, a wearable device, a network device (gNB) in an NR network, a network device in a future evolved PLMN network, a network device in an NTN network, or the like. By way of example and not limitation, in embodiments of the present disclosure, the network device may have mobile characteristics, for example, the network device may be a mobile device. Alternatively, the network device may be a satellite or a balloon station. Optionally, the network device may be a base station provided on a land, a water area, or the like.

In the embodiment of the present disclosure, the network device may provide services for a cell. The terminal device communicates with the network device through transmission resources (e.g., frequency domain resources, or spectrum resources) used by the cell. The cell may be a cell corresponding to the network device (e.g., base station), and the cell may belong to a macro base station or to a base station corresponding to a small cell. The small cell here may include a urban cell, a micro cell, a pico cell, a femto cell, etc. These small cells have the characteristics of small coverage and low transmission power, and are suitable for providing high-speed data transmission services.

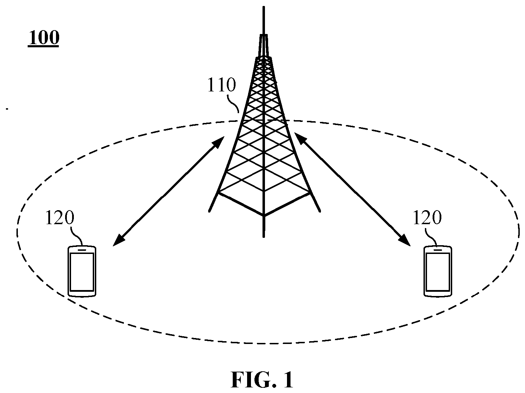

FIG. 1 exemplarily illustrates a communication system 100. The communication system includes a network device 110 and two terminal devices 120. In an embodiment, the communication system 100 may include multiple network devices 110, and the coverage range of each network device 110 may include another number of terminal devices 120, which is not limited in the embodiment of the present disclosure. In an implementation, the communication system 100 may further include other network entities such as a mobility management entity (MME), an access and mobility management function (AMF), and the like, but the embodiments of the present disclosure are not limited thereto. Among them, the network device may further include an access network device and a core network device. That is, the wireless communication system further includes multiple core network devices for communicating with the access network devices. The access network device may be an evolved base station (eNB), a macro base station, a micro base station (also referred to as a small base station), a pico base station, an AP, a TP, a next generation base station (gNB), or the like in a LTE system, a NR system, or a LAA-LTE system.

In order to facilitate understanding of the technical solutions of the embodiments of the present disclosure, the related technologies of the embodiments of the present disclosure will be described below. The related technologies below can be arbitrarily combined with the technical solutions of the embodiments of the present disclosure as options, and all of them fall within the scope of protection of the embodiments of the present disclosure.

### I. LTM

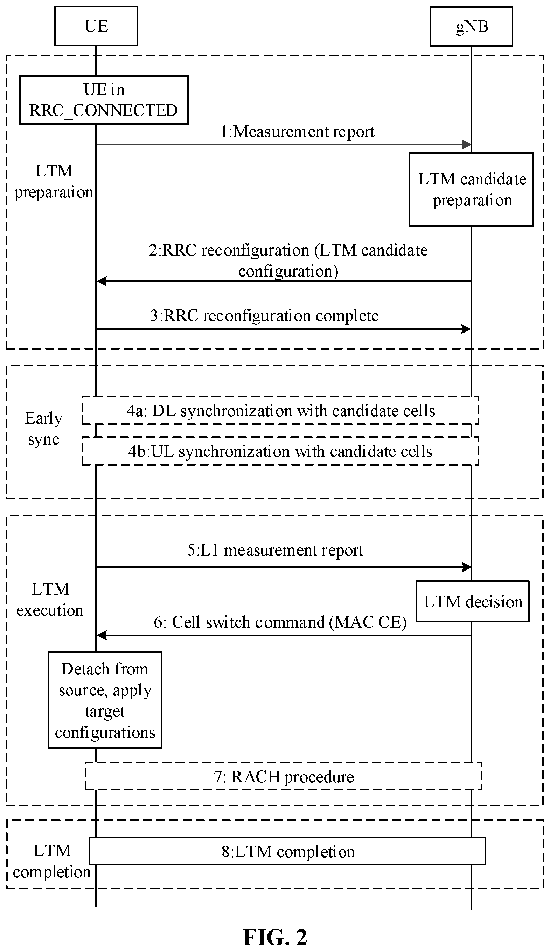

An example of a specific flow of an LTM is shown in FIG. 2.

Simply put, the execution steps of LTM can be divided into the following parts.

### 1. LTM preparation:

The UE performs measurement reporting. For example, in step 1, the UE sends a measurement report to a base station, such as a gNB. The base station transmits configuration information of at least one candidate cell to the UE through a radio resource control (RRC) reconfiguration message. For example, after the base station performs LTM candidate preparation, in step 2, the base station transmits an RRC reconfiguration message carrying LTM candidate configuration (i.e., RRC reconfiguration (LTM candidate configuration)) to the UE. In step 3, the UE transmits an RRC reconfiguration complete message (i.e., RRC reconfiguration complete) to the base station.

### 2. Early sync:

In order to reduce the latency caused by a random access (RA or RACH) procedure due to uplink synchronization, LTM supports early synchronization. An uplink timing advance (TA) of a target cell is obtained in advance before the UE accesses the target cell. For example, in step 4a, a downlink synchronization with candidate cells (i.e., DL synchronization with candidate cells) is performed, and in step 4b, an uplink synchronization with candidate cells (i.e., UL synchronization with candidate cells) is performed.

### 3. LTM execution

After LTM candidate cells are issued, the UE continuously performs L1 measurements on the configured candidate cells to monitor the quality of the candidate cells and report them to the network. For example, in step 5, the UE transmits an L1 measurement report to the gNB. The network side will also select a target cell for the UE based on measurement results reported by the UE. For example, after the base station makes an LTM decision, in step 6, a cell switch command (MAC CE) may be transmitted to the UE. In step 7, a random access procedure (i.e., RACH Procedure) may be performed between the UE and the base station.

### 4. LTM completion, see step 8.

The UE hands over to the target cell.

### II. Key update during handover

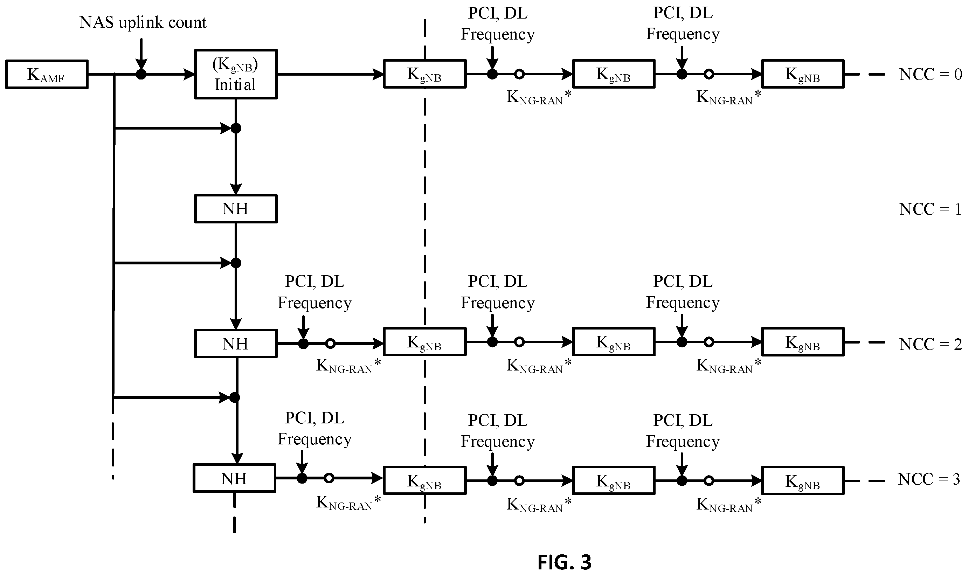

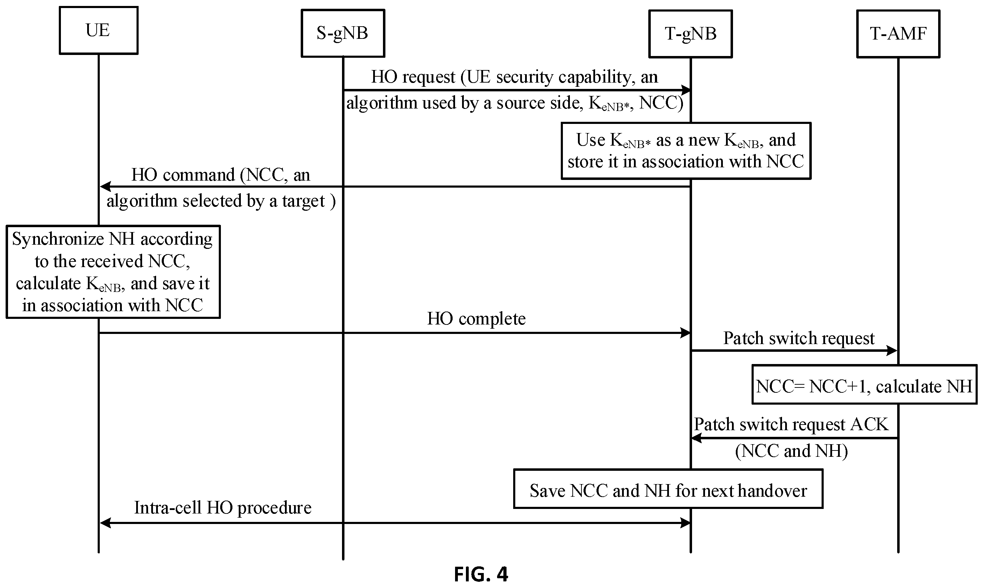

There are two types of security key derivation in the handover process, as shown in FIG. 3 and FIG. 4.

Horizontal derivation (or referred to as horizontal key derivation): a target key, such as K_{eNB*}/K_{NG-RAN*}, is generated based on an initial key, such as K_{gNB}/K_{eNB}, a physical cell identifier (PCI) of a target cell, and a downlink frequency.

Vertical derivation (or referred to as vertical key derivation): a next hop key (NH, Next Hop) is generated based on a next-hop chaining count (NCC), and a target key such as K_{eNB*}/K_{NG-RAN*} is generated based on the NH, a PCI of a target cell and a downlink frequency.
1. A source base station may perform the following operations:
   (1) generating a key K_{eNB*}/K_{NG-RAN*} based on a target PCI and a target downlink frequency; if there is an unused {NH, NCC}, then the NH is used to generate a key or is used as a key; if there is no unused {NH, NCC}, then the current key K_{gNB}/K_{eNB} is used.
   (2) forwarding the generated K_{eNB*}/K_{NG-RAN*} to a target base station; the K_{eNB*}/K_{NG-RAN*} is used as K_{gNB}/K_{eNB} after handover; an NCC for generating K_{eNB*}/K_{NG-RAN*} is carried in the handover command.
   For example, referring to FIG. 4, a source base station (i.e., S-gNB) transmits a handover request (i.e., HO request) to a target base station (i.e., T-gNB), which may include UE security capability, an algorithm used by the source side, K_{eNB*}, NCC, and the like.
2. The target base station may perform the following operations:
   The target base station will use the received K_{eNB*}/K_{NG-RAN*} as a K_{gNB}/K_{eNB} to communicate with the UE; associate the NCC received from the source base station with the K_{gNB}/K_{eNB}; send the NCC to the UE through the source base station by carrying the NCC in the handover command; after the handover is completed, the target base station transmits a path switch request to a MME.

Referring to FIG. 4, the target-side T-gNB may use the K_{eNB*} as a new K_{eNB} and save it in association with the NCC. After HO complete of the UE to the T-gNB, the T-gNB may transmit a path switch request to a target AMF (i.e., T-AMF) or the MME. The T-AMF may calculate the NH according to the NCC, for example, add 1 to NCC and then determine the corresponding NH. The T-AMF may return a path switch request ACK (which may carry {NCC, NH}) to the T-gNB. T-gNB can save {NCC, NH} for spare next switching. The T-gNB and the UE perform an intra-cell HO procedure.

3. For the UE, after receiving the handover command, the UE can synchronize the NH according to the received NCC, calculate the K_{eNS}, and save it in association with the NCC. A specific example is as follows:
(1) If the NCC received by the UE in the handover command is equal to the NCC value associated with the current UE-side K_{gNB}/K_{eNB}, the K_{eNB*}/K_{NG-RAN*} is generated based on the K_{gNB}/K_{eNB}, the PCI of the target cell, and the downlink frequency.
(2) If the NCC received by the UE in the handover command is different from the NCC value associated with the current UE-side K_{gNB}/K_{eNB}, a next hop NH may be generated based on the saved NH, and the K_{eNB*}/K_{NG-RAN*} may be generated based on the generated NH, the PCI of the target cell, and the downlink frequency.
(3) The UE uses the generated K_{eNB*}/K_{NG-RAN*} as a K_{gNB}/K_{eNB} to communicate with the target base station.

The related LTM handover only supports a scenario in which a key remains unchanged, that is, the UE does not need to perform key update when performing continuous handover. In order to further expand scenarios supported by LTM, the nineteenth generation version (Release19, R19) will continue to discuss inter-CU LTM, that is, a scenario where the key needs to be updated. Before the introduction of LTM, the traditional handover process only supported UE handover once, and the key update was only performed once. LTM supports continuous handover of a UE among configured candidate cells. In order to support continuous handover, an embodiment of the present disclosure provides a continuous key update scheme.

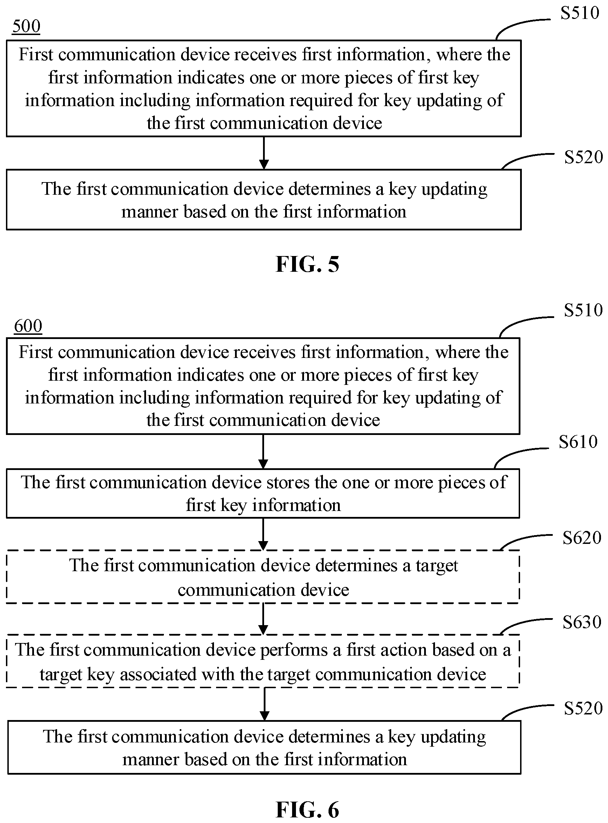

FIG. 5 is a schematic flowchart of a key updating method 500 according to an embodiment of the present disclosure. This method can optionally be applied to the system as illustrated in FIG. 1, but is not limited thereto. The method includes at least part of the following.

In S510, a first communication device receives first information, where the first information indicates one or more pieces of first key information including information required for key updating of the first communication device.

In S520, the first communication device determines a key updating manner based on the first information.

In an embodiment of the present disclosure, the first communication device may receive the first information from the second communication device. The first communication device may be a terminal device such as a UE, and the second communication device may be a network device such as a base station, a control unit (CU) of the base station, a data unit (DU) of the base station, or the like. After receiving the first information, the first communication device may directly determine a key updating manner based on the one or more pieces of first key information in the first information; alternatively, the one or more pieces of first key information in the first information may be stored first, and then the key updating manner may be determined based on other information and the stored one or more pieces of first key information. The first information may be lower-layer signaling such as MAC CE or carried by lower-layer signaling, or the first information may be higher-layer signaling such as RRC signaling or carried by higher-layer signaling.

For example, if the first information received by the terminal device from the network device is a MAC CE or is carried by the MAC CE, the key updating manner may be determined directly based on one or more pieces of first key information in the MAC CE. If the first information received by the terminal device from the network device is RRC signaling or carried by the RRC signaling, one or more pieces of first key information can be stored on the terminal device first, and then a key updating manner is determined based on other information and the stored one or more pieces of first key information.

An example of an LTM handover procedure may include that: a terminal device performs measurement reporting. The network device transmits configuration information of one or more LTM candidate cells to the terminal device through an RRC reconfiguration message. After the network device issues the LTM candidate cells, the terminal device may continuously perform L1 measurements on the configured candidate cells to monitor the quality of the candidate cells and report them to the network device. The network device may select a target cell for the UE based on the measurement results reported by the UE. Then, the network device may transmit an LTM cell switch command to the terminal device through the MAC CE. The LTM cell switch command may carry one or more pieces of first key information. The first communication device according to the embodiment of the present disclosure may more flexibly update the key based on the received one or more pieces of first key information.

In an implementation, the one or more pieces of first key information includes information required for the first communication device to perform key updating in the event of successive handovers.

In some examples, in a continuous switching scenario, such as an LTM handover scenario, the second communication device may be a source network device, such as a source base station (i.e., a source gNB), a CU of the source base station (i.e., a source gNB-CU), a DU of the source base station (i.e., a source gNB-DU), or the like. The source cell corresponds to a CU and/or a DU of the source base station. The first information received by the terminal device from the source network device may be an LTM cell switch command. The LTM cell switch command may be carried through the MAC CE. After receiving the LTM cell switch command, the terminal device will switch to the target cell. In the continuous switching procedure, the terminal device may continuously update a key of a target cell for each handover based on one or more pieces of first key information in the LTM cell switch command.

In an implementation, the first key information includes at least one of the following: a key associated with a target communication device and/or the second communication device; an index of the key associated with the target communication device and/or the second communication device; an identifier of a control unit of the second communication device; an identifier of the target communication device; an identifier of a candidate cell; one or more pieces of security information; security algorithm information; whether a key needs to be updated; tamper-proof information; or encrypted information.

In an embodiment of the present disclosure, the target communication device may include a target network device such as a target base station, a CU of the target base station, a DU of the target base station, or the like. The target cell corresponds to a CU and/or a DU of the target base station. The candidate cell may belong to a source base station or a target base station.

For example, the key associated with the target communication device may include a target key and/or an initial key (which may also be referred to as a master key) associated with the target cell. The key associated with the second communication device may include a target key and/or an initial key associated with the source cell or the source base station. As another example, the identifier of the control unit of the second communication device may include an identifier of the CU of the source base station. As another example, the identifier of the target communication device may include an identifier of the target cell.

In an implementation, the security information includes a next-hop chaining count (NCC) and next-hop information (NH) corresponding to the NCC. NCC and NH can appear in pairs. The NCC may also be referred to as security sequence information.

In an embodiment of the present disclosure, if the first key information received by the first communication device includes one or more pieces of security information, the first communication device may perform key updating using the one or more pieces of security information to determine a target key associated with the target communication device.

In an embodiment of the present disclosure, if the first key information received by the first communication device includes both a key associated with the target communication device and/or the second communication device and one or more pieces of security information, the key may be associated with the one or more pieces of security information. In this case, the key updating may be performed using the key and the one or more pieces of security information.

In an implementation, the first information includes tamper-proof information and/or encrypted information.

In an implementation, the first information is integrity-protected and/or encrypted.

In an implementation, the first information is processed according to a medium access control (MAC) layer encryption algorithm and/or an integrity protection algorithm.

In an implementation, the first information is first transmitted to a packet data convergence protocol (PDCP) layer through a MAC control element (CE) to perform at least one of encryption, integrity protection, decryption, or integrity verification, and then is transmitted to the MAC layer.

In an embodiment of the present disclosure, the security of the first information and/or the first key information therein can be improved by using tamper-proof information, encrypted information, integrity protection processing, encryption processing, and the like.

In an implementation, the first information further indicates at least one of the following: an identifier of a target communication device; an identifier of a candidate cell; transmission configuration indication (TCI) status information; timing advance (TA) information; or a random access resource.

In an embodiment of the present disclosure, the first information and/or the first key information may include an identifier of the target communication device, such as an identifier of the target cell, and may include an identifier of the candidate cell. If the first information includes the identifier of the target cell, the identifier of the candidate cell, and the first key information, the identifier of the target cell and the identifier of the candidate cell may correspond to the first key information. In this case, the first key information may not include the identifier of the target cell and the identifier of the candidate cell, or may include the identifier of the target cell and the identifier of the candidate cell.

In an embodiment of the present disclosure, the first key information may correspond to a target communication device and/or a candidate cell. For example, if one piece of first key information includes an identifier of a target cell, one piece of first key information may correspond to the target cell. If one piece of first key information includes identifiers of multiple candidate cells, one piece of first key information may correspond to the multiple candidate cells.

In an implementation, the one or more pieces of first key information are used to determine a target key associated with the target communication device and/or the second communication device. For example, one piece of first key information may be used to determine a target key for a target cell. The multiple pieces of first key information may be used to successively determine target keys for the multiple target cells.

In an implementation, the target key includes at least one of the following: a NH, a key of the second communication device K_{gNB}, a control plane security protection key K_{RRCenc}, or a user plane security protection key K_{UPenc}. For example, the first key information includes an NCC, and an NH corresponding to the NCC may be used as an input for generating a target key. For another example, the key of the second communication device K_{gNB} may include a key of a source base station, a key of a CU of the source base station, and a key of a DU of the source base station. The control plane security protection key may be used for encryption and integrity protection of control plane signaling and data. The user plane security protection key may be used for encryption and integrity protection of user plane signaling and data. The key markers K_{gNB}, K_{RRCenc}, and K_{Upenc} are merely examples and not limitations. In actual application scenarios, other markers can be used instead.

In an implementation, the key updating manner includes at least one of the following:
vertical key derivation is performed in a case where the first information includes new security information and/or information instructing to perform vertical key derivation; or
horizontal key derivation is performed in at least one of the following cases: the first information does not include security information; the first information includes information instructing to perform horizontal key derivation; or security information indicated by the first information is the same as the security information currently used by the first communication device.

In an embodiment of the present disclosure, if the first information is an LTM cell switch command, after receiving the LTM cell switch command, the first communication device may determine to perform vertical key derivation or horizontal key derivation based on the security information and/or the indication information included in the LTM cell switch command. For example, if the new security information is included in the LTM cell switch command, for example, the NCC in the LTM cell switch command is different from the NCC currently used by the first communication device, the first communication device may perform vertical key derivation. For another example, if the key derivation indication information included in the LTM cell switch command instructs to perform the vertical key derivation, the first communication device may perform the vertical key derivation. For another example, if no NCC is included in the LTM cell switch command, the first communication device may perform horizontal key derivation. For another example, if the NCC included in the LTM cell switch command is the same as the NCC currently used by the first communication device, the first communication device may perform horizontal key derivation. For another example, if the key derivation indication information included in the LTM cell switch command instructs to perform horizontal key derivation, the first communication device may perform horizontal key derivation.

In the embodiment of the present disclosure, an example of vertical key derivation may include that: a NH is first determined according to a NCC in security information, and then a target key is generated according to the NH, a PCI of a target cell, a downlink frequency, and the like. An example of horizontal key derivation may include that: a target key is generated based on an initial key, a PCI of a target cell, a downlink frequency, and the like. The initial key may be a key currently being used by the communication device, and may also be referred to as a current key or a master key.

In an implementation, the key updating manner includes that: horizontal key derivation or vertical key derivation is performed by default after receiving the first information. In the embodiment of the present disclosure, a default key updating manner after receiving the first information may be set. Either horizontal key derivation or vertical key derivation can be performed by default.

In an implementation, the operation of performing horizontal key derivation by default after receiving the first information includes that: horizontal key derivation is performed when it is determined that inter-CU Layer 1 or Layer 2 triggered mobility (LTM) is to be executed after receiving the first information. In the embodiment of the present disclosure, if inter-CU LTM is performed, it is possible to handover between different base stations, and in this case, horizontal key derivation is performed.

In an implementation, if horizontal key derivation or vertical key derivation is performed by default, the method further includes that: after the first communication device successfully accesses the target communication device, new security information is acquired for a next key updating.

FIG. 6 is a schematic flowchart of a key updating method 600 according to another embodiment of the present disclosure. The method 600 may include one or more features of the key updating method described above. In an implementation, the method further includes that: in S610, the first communication device stores the one or more pieces of first key information.

In an embodiment of the present disclosure, if the one or more pieces of first key information received by the first communication device are network configuration information or are carried by network configuration information, the one or more pieces of first key information may be stored in the first communication device first. The network configuration information may be higher-layer signaling such as RRC signaling.

In an implementation, the first key information is stored into a terminal variable of the first communication device.

In an implementation, the terminal variable is dedicated to storing the first key information, or the terminal variable is used to store the first key information and candidate cell configuration information. For example, the terminal variable is a UE variable. The first key information may be stored into a UE variable dedicated to storing key information, or the first key information may be stored into the same UE variable as the candidate cell configuration information.

In an implementation, the operation that the first communication device stores the first key information includes one of the following:
after receiving the candidate cell configuration information, the first communication device stores first key information corresponding to different candidate cells and/or the second communication device in the candidate cell configuration information into the terminal variable;
after obtaining or determining a target key, the first communication device stores first key information corresponding to the target key into the terminal variable;
first key information corresponding to a target communication device and/or the second communication device is stored into the terminal variable after the first communication device is successfully switched; or
when a switch command received by the first communication device indicates first key information, the first key information and/or a target key corresponding to the first key information are stored into the terminal variable.

For example, a network device such as a gNB may pre-configure one or more pieces of first key information corresponding to different candidate cells and/or network devices to a terminal device such as a UE. The terminal device may store the one or more pieces of first key information in the received candidate cell configuration information into the UE variable. If a serving cell or a source cell included in the network device determines a candidate cell based on measurement results from the UE, a switch request is transmitted to the candidate cell. The candidate cell may send a switch request feedback to the serving cell or the source cell. The serving cell or the source cell may forward the candidate cell configuration information to the UE. After receiving the candidate cell configuration information, the UE may store one or more pieces of first key information in the candidate cell configuration information.

For another example, if the terminal device generates a target key based on the first key information, the first key information may be stored into the UE variable. When the terminal device determines to perform LTM, the terminal device may first determine whether the target cell and/or the base station has a stored target key; if available, the stored target key is directly used; if not, the UE may generate and store a target key based on the received first key information.

For another example, if the terminal device successfully performs LTM, the terminal device may store first key information associated with the target cell and/or the base station into the UE variable.

For another example, if the terminal device receives a switch command, and the switch command indicates first key information, the terminal device may generate a key based on the first key information and store the generated key and/or the first key information.

In an implementation, the key updating method 600 further includes the following operations.
In S620, the first communication device determines a target communication device;
In S630, the first communication device performs a first action based on a target key associated with the target communication device, where the first action includes at least one of the following: applying the target key; or generating the target key.

For example, the terminal device determines a target cell and applies the target key and/or generates the target key based on a target key associated with the target cell.

In an implementation, the first information is network configuration information, and multiple pieces of security information in the first key information are carried by the network configuration information. The key updating manner includes that: when the LTM procedure being performed is inter-CU LTM, selecting a first unused piece of security information in order of the multiple pieces of security information to perform vertical key derivation.

In an embodiment of the present disclosure, the network configuration information received by the first communication device may include one or more pieces of first key information. One piece of first key information may include one or more pieces of security information. If the one or more pieces of security information include NCC1, NCC2, and NCC3, where the NCC2 and NCC3 are unused security information. In the case of inter-CU LTM, it is necessary to switch from Cell1 to Cell2 and then to Cell3, and the first communication device may first select the NCC2 to perform vertical key derivation during switching from the Cell1 to the Cell2, and may then select the NCC3 to perform vertical key derivation during switching from the Cell2 to the Cell3.

In an implementation, the first information is an LTM cell switch command, the key derivation indication information is carried by the LTM cell switch command, and the key derivation indication information is used to instruct the first communication device to perform horizontal key derivation or vertical key derivation. In an embodiment of the present disclosure, the first communication device may receive the first information multiple times. For example, first information received by the first communication device for the first time is network configuration information, and one or more pieces of first key information in the network configuration information may be saved. First information received by the first communication device for the second time is an LTM cell switch command. If key derivation indication information in the LTM cell switch command instructs to perform horizontal key derivation, the first communication device may perform the horizontal key derivation according to the stored one or more pieces of first key information. If the key derivation indication information in the LTM cell switch command instructs to perform vertical key derivation, the first communication device may perform the vertical key derivation according to the stored one or more pieces of first key information.

In an implementation, the key updating manner includes that: when the key derivation indication information instructs to perform vertical key derivation, selecting unused security information in the order of the multiple pieces of security information to perform the vertical key derivation; Alternatively, new security information is determined based on the used security information, and the vertical key derivation is performed based on the new security information.

For example, if the key derivation indication information in the LTM cell switch command instructs to perform vertical key derivation, the first communication device may select unused security information in the order of multiple pieces of stored security information to perform the vertical key derivation. For another example, if the key derivation indication information in the LTM cell switch command instructs to perform vertical key derivation, the first communication device may generate new security information based on the used security information, for example, after adding 1 or 2 to the value of the currently used NCC, the vertical key derivation is performed using the new NCC.

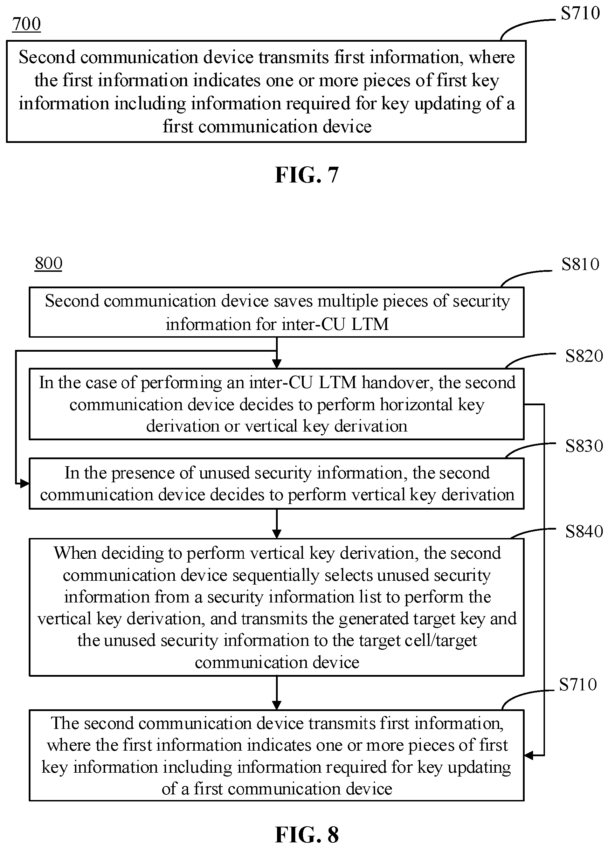

FIG. 7 is a schematic flowchart of a key updating method 700 according to an embodiment of the present disclosure. This method can optionally be applied to the system shown in FIG. 1, but is not limited thereto. The method includes at least part of the following.

In S710: a second communication device transmits first information, where the first information indicates one or more pieces of first key information including information required for key updating of a first communication device.

In an embodiment of the present disclosure, the second communication device may transmit the first information to the first communication device. The first communication device may be a terminal device such as a UE, and the second communication device may be a network device such as a base station, a control unit (CU) of the base station, a data unit (DU) of the base station, or the like. After receiving the first information, the first communication device may directly determine a key updating manner based on the one or more pieces of first key information in the first information; alternatively, the one or more pieces of first key information in the first information may be stored first, and then the key updating manner may be determined based on other information and the stored one or more pieces of first key information. The first information may be a MAC CE or carried by the MAC CE; alternatively, the first information may be RRC signaling or carried by RRC signaling.

In an implementation, the one or more pieces of first key information include information required for the first communication device to perform continuous key updating in the event of continuous switching.

In an implementation, the first key information includes at least one of the following: a key associated with a target communication device and/or the second communication device; an index of the key associated with the target communication device and/or the second communication device; an identifier of a control unit of the second communication device; an identifier of the target communication device; one or more pieces of security information; security algorithm information; whether a key needs to be updated; tamper-proof information; or encrypted information.

In an implementation, the security information includes an NCC and an NH corresponding to the NCC.

In an implementation, the first information includes tamper-proof information and/or encrypted information.

In an implementation, the first information is integrity-protected and/or encrypted.

In an implementation, the first information is processed according to a MAC layer encryption algorithm and/or an integrity protection algorithm; alternatively, the first information is first transmitted to the PDCP layer through the MAC CE to perform at least one of encryption, integrity protection, decryption, or integrity verification, and then is transmitted to the MAC layer.

In an implementation, the first information is further used to indicate at least one of the following: an identifier of a target communication device; an identifier of a candidate cell; TCI status information; TA information; or a random access resource.

In an implementation, the one or more pieces of first key information are used to determine a target key associated with the target communication device/second communication device.

In an implementation, the target key includes at least one of the following: a NH, a key of the second communication device K_{gNB}, a control plane security protection key K_{RRCenc}, or a user plane security protection key K_{UPenc}.

For explanations and examples of the first key information, the first information, the target key, and the like in the present embodiment, reference can be made to the related description in the above embodiments.

In an implementation, the method further includes: in a case where the target communication device does not belong to the second communication device, the second communication device requests from the target communication device whether to perform horizontal key derivation or vertical key derivation before transmitting the first information.

In the embodiment of the present disclosure, the second communication device may determine the target communication device based on the measurement results reported by the first communication device. And subsequent processing may be performed according to the ownership status of the target communication device. For example, if a CU to which the target cell belongs is different from a CU to which the source cell belongs, the target cell does not belong to the source base station. The source base station may first send request information to the target cell to determine whether to perform horizontal key derivation or vertical key derivation. If the target cell feeds back a response of performing vertical key derivation after the source base station sends the request information to the target cell, the source base station confirms that the vertical key derivation is to be performed. If the target cell feeds back a response of performing horizontal key derivation after the source base station sends the request information to the target cell, the source base station confirms that the horizontal key derivation is to be performed.

In an implementation, the operation that the second communication device transmits the first information includes that:
when the second communication device has unused security information, the second communication device transmits the first information to the first communication device, where the first information carries the unused security information.

In an embodiment of the present disclosure, the second communication device may store one or more pieces of security information, and may successively use these pieces of security information according to the need of key updating. After determining the target communication device, the second communication device may determine whether unused security information currently exists in itself. If the second communication device has unused security information, the one or more pieces of unused security information may be carried in the first information and transmitted to the first communication device. For example, the source base station carries the NCC in the switch command.

In an implementation, the key updating method further includes that: the second communication device transmits request information to the target communication device, where the request information is used to instruct the target communication device to request new security information from a third communication device. In an embodiment of the present disclosure, if the second communication device and/or the target communication device do not have unused security information, the second communication device and/or the target communication device may request new security information from the third communication device, such as the AMF. After receiving the new security information from the AMF, the second communication device and/or the target communication device may delete the previously stored security information and subsequently use the new security information configured by the AMF. For example, the second communication device may transmit the request information to the target communication device. After receiving the request information, the target communication device may transmit security information request information to the third communication device, such as the AMF. After receiving the security information request information, the third communication device may return the requested new security information to the target communication device. After receiving the new security information from the AMF or the second communication device, the target communication device may update a local target key with the new security information.

In an implementation, the key updating method further includes that: the second communication device transmits new security information to the target communication device. In an embodiment of the present disclosure, the second communication device may also transmit unused security information and/or new security information obtained from the AMF to the target communication device.

In an implementation, the operation that the second communication device transmits the first information includes that:

when the second communication device does not have unused security information, the second communication device transmits the first information to the first communication device. When the first information includes used security information or does not include security information, the target communication device is instructed to perform horizontal key derivation or the generated target key of the target communication device is indicated to the target communication device. If the target communication device receives the indication information of horizontal key derivation, the target key may be generated based on the initial key, the PCI, and the downlink frequency.

In an implementation, the first information is an LTM cell switch command.

In an implementation, the LTM cell switch command includes key derivation instruction information for instructing the first communication device to perform horizontal key derivation or vertical key derivation.

FIG. 8 is a schematic flowchart of a key updating method 800 according to another embodiment of the present disclosure. The method 800 may include one or more features of the key updating method described above. In an implementation, the method further includes that: in S810, the second communication device stores multiple pieces of security information for inter-CU LTM.

In an implementation, the method further includes the following operation. In S820, in the case of performing an inter-CU LTM handover, the second communication device decides to perform horizontal key derivation or vertical key derivation. If the second communication device decides to perform the horizontal key derivation, the target key may be generated based on the initial key, the PCI, and the downlink frequency, and then the target key may be transmitted to the target communication device. Alternatively, an LTM cell switch command instructing to perform horizontal key derivation may also be transmitted to the first communication device. If the second communication device decides to perform vertical key derivation, the target key may be generated based on the initial key, the security information, the PCI, and the downlink frequency, and then the target key may be transmitted to the target communication device. Alternatively, an LTM cell switch command instructing to perform vertical key derivation may also be transmitted to the first communication device.

In an implementation, the method further includes the following operation. In S830, in the presence of unused security information, the second communication device decides to perform vertical key derivation. In this case, the second communication device may transmit an LTM cell switch command instructing to perform vertical key derivation to the first communication device.

In an implementation, the method further includes the following operation. In S840, when deciding to perform vertical key derivation, the second communication device sequentially selects unused security information from a security information list to perform the vertical key derivation, and transmits the generated target key and the unused security information to the target communication device. For example, in a case where it is decided to perform vertical key derivation, the second communication device may select unused security information from the security information list, and generate a target key based on the initial key, the selected security information, the PCI, and the downlink frequency, Then, the second communication device may transmit the generated target key and the unused security information in the security information list to the target communication device. The second communication device may also transmit an LTM cell switch command to the first communication device, which may indicate information for performing vertical key derivation and unused security information selected from the security information list. In an implementation, the security information includes a NCC and a NH.

In an implementation, the first information is carried by candidate cell configuration information transmitted by the second communication device to the first communication device.

In an implementation, the method further includes that: the second communication device determines a candidate cell based on measurement results reported by the first communication device; the second communication device initiates a switch request to the candidate cell; and the second communication device receives a switch request feedback from the candidate cell.

For specific examples of the second communication device executing the methods 700 and 800 of the present embodiment, reference can be made to the related description of the second communication device in the above-described methods 500 and 600, and the description thereof is not repeated here for the sake of brevity.

An embodiment of the present disclosure proposes a method for key updating in a handover process, so that a UE can support continuous key updating in a continuous switching process, and the key updating method may include any of the following manners: key updating in which a key is updated based on lower-layer signaling; or key updating in which a key is stored based on a UE variable.

### Example 1: Updating a Key based on lower-layer Signaling

An example of a UE performing an LTM procedure is as follows:
1. The UE performs measurement reporting, and the base station transmits configuration information of at least one candidate cell to the UE through an RRC reconfiguration message.
2. After the LTM candidate cells are issued, the UE continuously performs L1 measurements on the configured candidate cells to monitor the quality of the candidate cells and report them to the network. The network side will select a target cell for the UE based on the measurement results reported by the UE.
3. The UE receives an LTM cell switch command and performs a corresponding procedure based on an instruction therein. The LTM cell switch command includes at least one of the following:
   (1) an identifier of a target cell (a candidate cell);
   (2) key information of the target cell, which includes at least one of the following: a key associated with the target cell/network device (e.g., gNB, gNB-CU, gNB-DU) K_{gNB}; an index of the key associated with the target cell/network device; an identifier of the network device, such as an identifier of a gNB-CU; security sequence information, such as a nextHop chaining count (NCC) or counter information, which may be associated with the above-described key; a NH; security algorithm information, such as an index associated with a security algorithm selected by the network; whether the key needs to be updated (vertical key updating); tamper-proof information; or encrypted information.
   (3) TCI state info; or
   (4) TA (info).

Optionally, the LTM cell switch command may carry tamper-proof (integrity protection) or encrypted information. Optionally, the LTM cell switch command message itself may be encrypted and/or integrity-protected. For example, the LTM cell switch command may be processed based on a MAC layer encryption and integrity protection algorithm. Alternatively, a MAC CE with the LTM cell switch command may be transmitted to the PDCP layer for at least one processing of encryption, integrity protection, decryption, or integrity verification, and then is transmitted to the MAC layer.

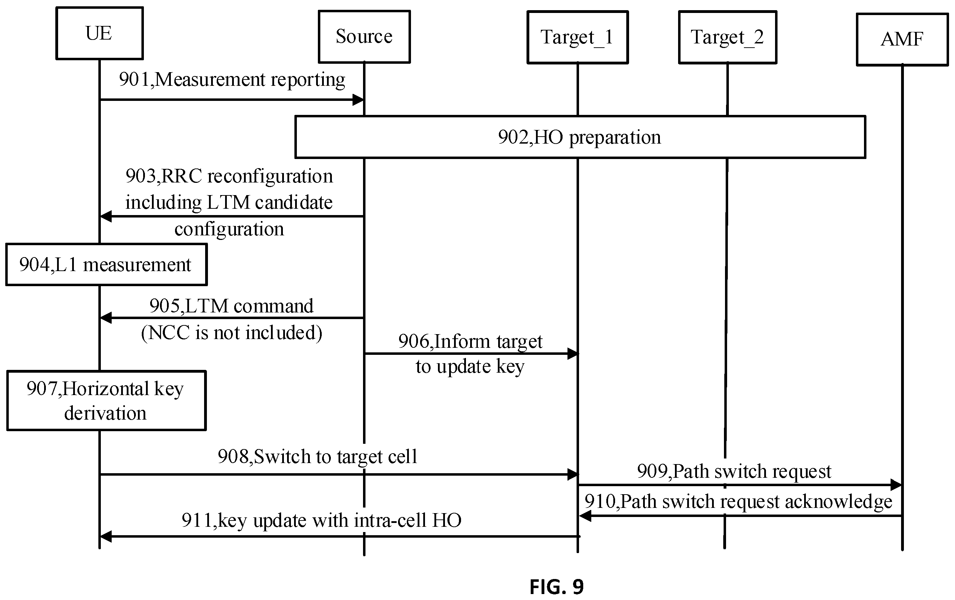

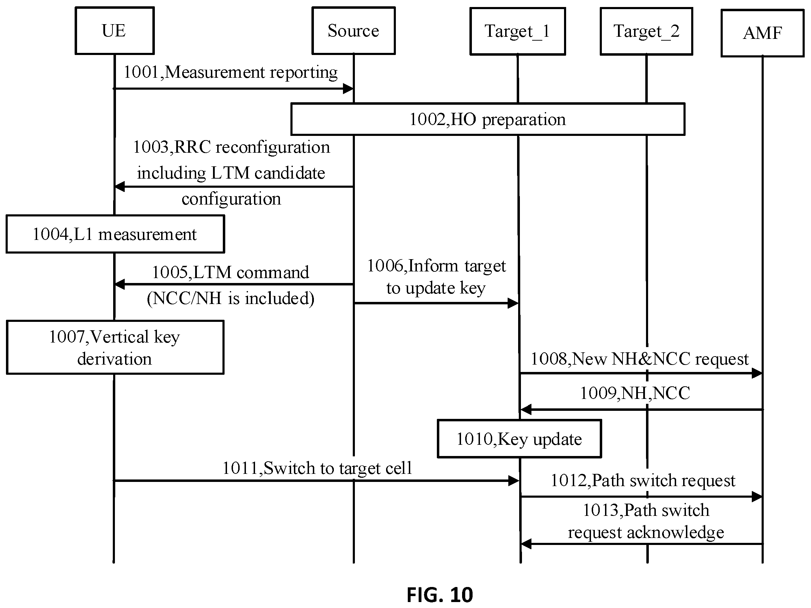

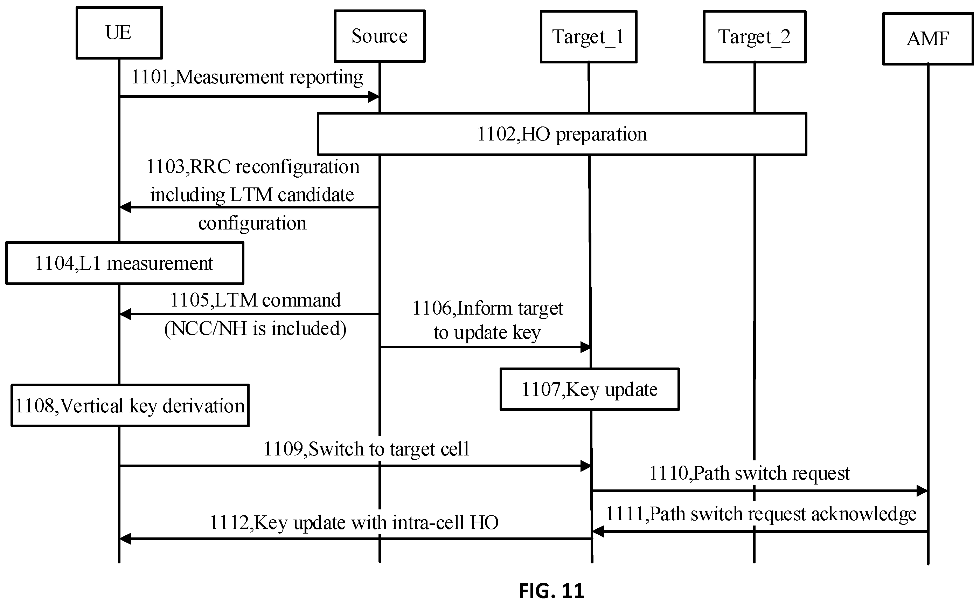

4. The UE determines whether/how to update the key based on the content of the LTM cell switch command.
(1) If the LTM cell switch command indicates a new NCC or other information instructing the UE to perform vertical key derivation, the UE performs vertical key derivation. See FIG. 10 and FIG. 11.
(2) Otherwise, if the LTM cell switch command does not carry an NCC, or carries information instructing the UE to perform horizontal key derivation, or carries a NCC which is the same as that currently used by the UE, the UE performs horizontal key derivation. See FIG. 9.

From the perspective of the network side, the network device may perform the following operations.

A source base station (i.e., a source gNB) determines a target cell based on a measurement report from the UE, and determines whether there is currently an unused NCC. For example, a data unit of the source base station (i.e., a source gNB-DU) determines a target cell based on a measurement result reported by the UE. If a control unit (CU) to which the target cell belongs is different from a control unit of the source base station (i.e., a source gNB-CU), the control unit of the source base station (i.e., the source gNB-CU) requests the target gNB-CU whether to perform horizontal key derivation or vertical key derivation before transmitting the LTM cell switch command.

If there is an unused NCC (vertically derivation): the source base station carries the NCC in the switch command and instructs the target cell to request a new NCC and NH from an AMF, or directly informs the target cell of the new NCC and NH. See FIG. 10 and FIG. 11.

If there is no unused NCC (horizontal derivation): the source base station carries the old (used) NCC in the switch command and instructs the target cell to perform horizontal derivation; or indicates the generated new target key K_{NG-RAN*} to the target cell. See FIG. 9.

(3) Optionally, the UE may perform horizontal key derivation by default after receiving the switch command. After the UE successfully accesses the target cell, the target cell acquires a new NCC and NH through a path switch request for the next key updating. Optionally, after receiving the switch command, the UE determines to execute inter-CU LTM and executes horizontal key derivation by default. See FIG. 9.

For example, the interaction process among a UE, a target cell, an AMF, and the like can be carried out in the following ways.

In FIG. 9, in a case where a new NCC is not included, a key updating procedure may include the following operations.

In 901: a UE performs a measurement reporting to a source base station (or a source cell).

In 902: a handover (HO) preparation is performed between the source base station and a target base station (or a target cell).

In 903: the source base station sends RRC reconfiguration including LTM candidate configuration to the UE.

In 904: the UE performs L1 measurement.

In 905: the source base station sends an LTM command with a NCC is not included to the UE.

In 906: the source base station informs a target cell Target_1 to update a key.

In 907: the UE performs horizontal key derivation.

In 908: the UE switches to the target cell Target_1.

In 909: the target cell Target_1 transmits a path switch request to an AMF.

In 910: the AMF returns a path switch request acknowledge to the target cell Target_1.

In 911: the target cell Target_1 performs key updating with intra-cell HO.

In FIG. 10, in a case where a new NCC is included, a key updating procedure may include the following operations.

In 1001: the UE performs a measurement reporting to a source base station.

In 1002: a handover (HO) preparation is performed between the source base station and a target cell.

In 1003: the source base station sends RRC reconfiguration including LTM candidate configuration to the UE.

In 1004: the UE performs L1 measurement.

In 1005: the source base station transmits an LTM command with a NCC/NH is included to the UE.

In 1006: the source base station informs the target cell Target_1 to update a key.

In 1007: the UE performs vertical key derivation.

In 1008, the target cell Target_1 sends a new NH and NCC request (i.e., New NH&NCC request) to the AMF.

In 1009: the AMF returns a NH and a NCC to the target cell Target_1.

In 1010: the target cell Target_1 performs key updating.

In 1011: the UE switches to the target cell Target_1.

In 1012: the target cell Target_1 sends a path switch request to the AMF.

In 1013: the AMF returns a path switch request acknowledge to the target cell Target_1.

In FIG. 11, in a case where a new NCC is included, another key updating procedure may include the following operations.

In 1101: the UE performs a measurement reporting to a source base station.

In 1102: a handover (HO) preparation is performed between the source base station and a target cell.

In 1103: the source base station sends RRC reconfiguration including LTM candidate configuration to the UE.

In 1104: the UE performs L1 measurement.

In 1105: the source base station transmits an LTM command with a NCC/NH is included to the UE.

In 1106: the source base station informs the target cell Target_1 to update a key.

In 1107: the target cell Target_1 perform key updating.

In 1108: the UE performs vertical key derivation.

In 1109: the UE switches to the target cell Target_1.

In 1110: the target cell Target_1 sends a path switch request to the AMF.

**In** 1111: the AMF returns a path switch request acknowledgement to the target cell Target_1.

**In** 1112: the target cell Target_1 performs key updating with intra-cell HO.

### Example 2: UE stores multiple keys

1. The UE stores at least one piece of first key information used to determine a target key. The first key information includes at least one of the following: a key (which may be a target key) associated with a target cell (candidate cell)/gNB; an index of the key associated with the target cell (candidate cell)/gNB; an identifier of the target cell (candidate cell)/gNB; security sequence information, such as NCC (next hop chaining count) or counter information, which may be associated with the key described above; a NH; or a security algorithm.

Specifically, the storage manner may be to store one or more pieces of first key information into a corresponding UE variable. For example, one or more pieces of first key information may be stored into a UE variable for storing key information, or one or more pieces of first key information and candidate cell configuration information may be stored into the same UE variable.

The target key is associated with the target cell/base station, and examples of the target key may include: NH, K_{gNB}, K_{RRCenc} and K_{UPenc}.

A condition for the UE to store the first key information includes one of the following:
(1) The UE receives candidate cell configuration information. The network may pre-configure key information corresponding to different candidate cells/gNBs to the UE. The specific implementation is as follows: a serving cell (or a source cell) performs a handover (HO) preparation based on a measurement report from the UE, including: determining a candidate cell and initiating a handover request to the candidate cell. The source cell receives a handover request feedback sent by the candidate cell, and forwards the candidate cell configuration information to the UE. The UE receives the candidate cell configuration information including at least one piece of first key information. Each piece of first key information may be associated with a cell/base station. After receiving the candidate cell configuration information, the UE may execute a flow of storing the key information;
(2) After the UE obtains/determines the first key information, the UE stores the first key information into the UE variable. Specifically, the UE stores the first key information after generating the key. When the UE determines to perform LTM, it first determines whether the target cell or the base station has a stored key. If there is a stored key, the UE can directly use it, and if not, the UE generates a key based on the first key information and stores it;
(3) Handover completion: After the UE successfully executes LTM, the first key information associated with the target cell/base station is stored into the UE variable; or
(4) Receiving a switch command: the UE receives a switch command, and if the first key information is indicated in the switch command, the UE stores the key or generates a key based on the first key information and stores it.

2. The UE determines the target cell and performs the first action based on the target key associated with the target cell. The first action includes at least one of the following: applying the key; or generating the key.

3. If the network configuration received by the UE includes multiple NCC values, the procedure of performing key updating after storing N NCCs is as follows:

Manner 1: the UE determines whether the executed LTM procedure is inter-CU LTM, and if so, the UE sequentially selects the first unused NCC to perform vertical derivation.

Manner 2: the UE receives an LTM cell switch command, and determines whether to perform horizontal derivation or vertical derivation based on the indication information in the LTM cell switch command. For example, when the indication information represents 0, it indicates that horizontal derivation is to be performed, and when the indication information represents 1, it indicates that vertical derivation is to be performed, that is, the UE sequentially selects an unused NCC from the NCC list to perform vertical derivation.

For the network side, a source base station or a control unit of the source base station (e.g., a source gNB-CU, or simply a source CU) saves multiple NCC values for the inter-CU LTM. When performing inter-CU LTM handover, the source CU decides whether to perform horizontal derivation or vertical derivation, or perform vertical derivation as long as there is an unused {NCC, NH} pair.

If the source CU determines to perform vertical derivation, the source CU sequentially selects unused {NCC, NH} pairs from the NCC list. The vertical derivation is performed based on the NH, and the generated new key and other unused {NCC, NH} pairs are delivered to a control unit of the target cell or target base station (e.g., a target gNB-CU, or simply a target CU).

In another implementation, the UE does not need to maintain multiple NCCs. The UE determines whether to perform horizontal derivation or vertical derivation based on the indication information in the LTM cell switch command. If the vertical derivation is to be performed, the UE determines a new NCC value by adding 1 (or other values) to the current NCC value (i.e., the new NCC=the current NCC+1), and performs the vertical derivation based on a NH corresponding to the new NCC value.

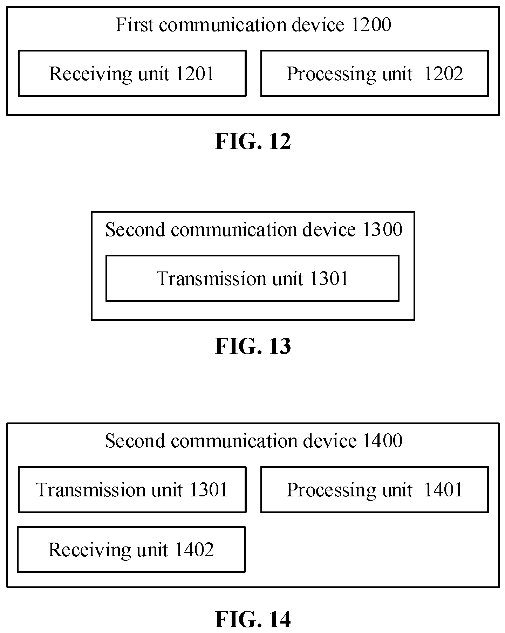

FIG. 12 is a schematic block diagram of a first communication device 1200 according to an embodiment of the present disclosure. The first communication device 1200 includes a receiving unit 1201 and a processing unit 1202.

The receiving unit 1201 is configured to receive first information, where the first information indicates one or more pieces of first key information including information required for key updating of the first communication device.

The processing unit 1202 is configured to determine a key updating manner based on the first information.

In an implementation, the one or more pieces of first key information includes information required for the first communication device to perform key updating in the event of continuous switching.

In an implementation, the key updating manner performed by the processing unit 1202 includes at least one of the following:
performing vertical key derivation in a case where the first information includes new security information and/or information instructing to perform vertical key derivation;
   or
performing horizontal key derivation in at least one of the following cases: the first information does not include security information; the first information includes information instructing to perform horizontal key derivation; or security information indicated by the first information is the same as the security information currently used by the first communication device.

In an implementation, the key updating manner performed by the processing unit 1202 includes performing horizontal key derivation or vertical key derivation by default after receiving the first information.

In an implementation, the processing unit 1202 is further configured to acquire new security information for next key updating after successfully accessing the target communication device.

In an implementation, the processing unit 1202 performs horizontal key derivation by default after receiving the first information includes that: performing horizontal key derivation when it is determined that an inter-CU layer 1 or layer 2 triggered mobility (LTM) is to be performed after receiving the first information.

In an implementation, the first information is an LTM cell switch command.

In an implementation, the processing unit 1202 is further configured to store the one or more pieces of first key information.

In an implementation, the processing unit 1202 stores the first key information including one of the following:
after receiving candidate cell configuration information, storing first key information corresponding to different candidate cells and/or second communication devices in the candidate cell configuration information into a terminal variable;
after obtaining or determining a target key, storing first key information corresponding to the target key into a terminal variable;
after the handover is successful, storing first key information corresponding to a target communication device and/or the second communication device into a terminal variable; or
when a received switching command indicates first key information, storing the first key information and/or a corresponding target key into a terminal variable.

In an implementation, the processing unit 1202 is further configured to: determine a target communication device; and perform a first action based on a target key associated with the target communication device, where the first action includes at least one of: applying the target key; or generating the target key.

In an implementation, the first information is network configuration information, multiple pieces of security information in the first key information are carried by the network configuration information, and the key updating manner executed by the processing unit includes: when the executed LTM procedure is inter-CU LTM, selecting a first unused piece of security information in order of the multiple pieces of security information to perform vertical key derivation.

In an implementation, the first information is an LTM cell switch command, the key derivation indication information is carried by the LTM cell switch command, and the key derivation indication information is used to instruct the first communication device to perform horizontal key derivation or vertical key derivation.

In an implementation, the key updating manner performed by the processing unit 1202 includes: selecting unused security information to perform vertical key derivation in order of the multiple pieces of security information when the key derivation indication information instructs to perform vertical key derivation; or, determining new security information based on used security information, and performing vertical key derivation based on the new security information.

In an implementation, the first key information is stored in a terminal variable of the first communication device.

In an implementation, the terminal variable is dedicated to storing the first key information; or the terminal variable is used to store the first key information and candidate cell configuration information.

In an implementation, the first key information includes at least one of: a key associated with a target communication device and/or a second communication device; an index of the key associated with the target communication device and/or the second communication device; an identifier of a control unit of the second communication device; an identifier of the target communication device; an identifier of a candidate cell; one or more pieces of security information; security algorithm information; whether a key needs to be updated; tamper-proof information; or encrypted information.

In an implementation, the security information includes an NCC and next hop information (NH) corresponding to the NCC.

In an implementation, the first information includes tamper-proof information and/or encrypted information.

In an implementation, the first information is integrity-protected and/or encrypted.

In an implementation, the first information is processed according to a MAC layer encryption algorithm and/or an integrity protection algorithm; alternatively, the first information is first transmitted to a PDCP layer through a MAC CE to perform at least one of encryption, integrity protection, decryption, or integrity verification, and then is transmitted to the MAC layer.

In an implementation, the first information is further used to indicate at least one of: an identifer of the target communication device; an identifier of the candidate cell; TCI status information; timing advance (TA) information; or a random access resource.

In an implementation, the one or more pieces of first key information is used to determine a target key associated with the target communication device and/or the second communication device.

In an implementation, the target key includes at least one of the following: a NH, a key of a second communication device K_{gNB}, a control plane security protection key K_{RRCenc}, or a user plane security protection key K_{UPenc}.

The first communication device 1200 according to the embodiment of the present disclosure can realize the corresponding function of the terminal device in the above-described method embodiment. The flow, function, implementation, and beneficial effect corresponding to each module (sub-module, unit, component, etc.) in the first communication device 1200 can be described in the corresponding description in the above-described method embodiment, and will not be repeatedly described herein. The functions described with respect to various modules (sub-modules, units, components, etc.) in the first communication device 1200 of the embodiment of the present disclosure may be implemented by different modules (sub-modules, units, components, etc.), or may be implemented by the same module (sub-module, unit, component, etc.).

FIG. 13 is a schematic block diagram of a second communication device 1300 according to an embodiment of the present disclosure. The second communication device 1300 may include a transmission unit 1301.

The transmission unit 1301 is configured to transmit first information, where the first information indicates one or more pieces of first key information including information required for key updating of a first communication device.

In an implementation, the one or more pieces of first key information includes information required for the first communication device to perform key updating during continuous switching.

FIG. 14 is a schematic block diagram of a second communication device 1400 according to another embodiment of the present disclosure. The second communication device 1400 may include one or more of the features of the second communication device described above. In an implementation, the second communication device further includes a processing unit 1401.

The processing unit 1401 is configured to request from a target communication device whether to perform horizontal key derivation or vertical key derivation before transmitting the first information in a case where the target communication device does not belong to the second communication device.

In an implementation, the transmission unit 1301 is configured to transmit the first information to the first communication device when the second communication device has unused security information, where the first information carries the unused security information.

In an implementation, the transmission unit 1301 is further configured to: transmit request information to the target communication device, where the request information is used to instruct the target communication device to request new security information from a third communication device; or, transmit new security information to the target communication device.

In an implementation, the transmission unit 1301 is further configured to transmit the first information to the first communication device in a case where there is no unused security information in the second communication device, and to instruct the target communication device to perform horizontal key derivation or to indicate a generated target key of the target communication device to the target communication device in a case where used security information is included in the first information or security information is not included in the first information.

In an implementation, the first information is an LTM cell switch command.

In an implementation, the LTM cell switch command includes key derivation indication information for instructing the first communication device to perform horizontal key derivation or vertical key derivation.

In an implementation, the processing unit 1401 is further configured to save multiple pieces of security information for inter-CU LTM.

In an implementation, the processing unit 1401 is further configured to decide to perform horizontal key derivation or vertical key derivation in a case where an inter-CU LTM handover is performed.

In an implementation, the processing unit 1401 is further configured to decide to perform vertical key derivation in the presence of unused security information.

In an implementation, the processing unit 1401 is further configured to sequentially select unused security information from a security information list to perform vertical key derivation in a case where it is decided to perform vertical key derivation, and deliver/transmit a generated target key and the unused security information to the target communication device.

In an implementation, the security information includes NCC and NH.

In an implementation, the first information is carried by candidate cell configuration information transmitted by the second communication device to the first communication device.

In an implementation, the processing unit 1401 is further configured to determine a candidate cell based on a measurement result reported by the first communication device.

The transmission unit 1301 is further configured to initiate a handover request to the candidate cell.

As shown in FIG. 14, the second communication device further includes a receiving unit 1202 for receiving a handover request feedback from the candidate cell.

In an implementation, the first key information includes at least one of: a key associated with the target communication device and/or the second communication device; an index of the key associated with the target communication device and/or the second communication device; an identifier of a control unit of the second communication device; an identifier of the target communication device; one or more pieces of security information; security algorithm information; whether a key needs to be updated; tamper-proof information; or encrypted information.

In an implementation, the security information includes an NCC and an NH corresponding to the NCC.

In an implementation, the first information includes tamper-proof information and/or encrypted information.

In an implementation, the first information is integrity-protected and/or encrypted.

In an implementation, the first information is processed according to a MAC layer encryption algorithm and/or an integrity protection algorithm; alternatively, the first information is first transmitted to a PDCP layer through a MAC CE to perform at least one of encryption, integrity protection, decryption, or integrity verification, and then is transmitted to the MAC layer.

In an implementation, the first information is further used to indicate at least one of: an identifier of the target communication device; an identifier of the candidate cell; TCI status information; TA information; or a random access resource.

In an implementation, the one or more pieces of first key information is used to determine a target key associated with the target communication device/second communication device.

In an implementation, the target key includes at least one of the following: a NH, a key of the second communication device K_{gNB}, a control plane security protection key K_{RRCenc}, or a user plane security protection key K_{UPenc}.

The second communication devices 1300 and 1400 according to the embodiments of the present disclosure can implement the corresponding functions of the network devices in the embodiments of the methods 700 and 800 described above. Flows, functions, implementations, and beneficial effects corresponding to each module (sub-module, unit, component, etc.) in the second communication devices 1300 and 1400 can be referenced to the corresponding description in the above-described method embodiments, and will not be repeatedly described here. The functions described with respect to the respective modules (sub-modules, units, components, etc.) in the second communication devices 1300 and 1400 of the embodiments of the present disclosuer may be implemented by different modules (sub-modules, units, components, etc.), or may be implemented by the same module (sub-modules, units, components, etc.).

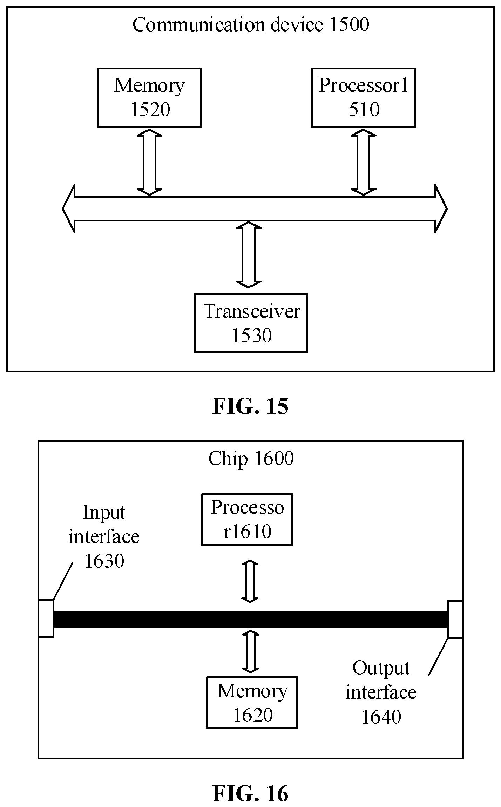

FIG. 15 is a schematic structural diagram of a communication device 1500 according to an embodiment of the present disclosure. The communication device 1500 includes a processor 1510 that can call and run a computer program from a memory to cause the communication device 1500 to implement the method in the embodiment of the present disclosure.

In an implementation, the communication device 1500 may further include a memory 1520. The processor 1510 may call and run a computer program from the memory 1520 to cause the communication device 1500 to implement the method in the embodiment of the present disclosure.

The memory 1520 may be a separate device independent of the processor 1510 or may be integrated into the processor 1510.

In an implementation, the communication device 1500 may further include a transceiver 1530. The processor 1510 may control the transceiver 1530 to communicate with other devices, in particular, may transmit information or data to or receive information or data transmitted by other devices.

The transceiver 1530 may include a transmitter and a receiver. The transceiver 1530 may further include antennas, and the number of antennas may be one or more.

In an implementation, the communication device 1500 may be the first communication device according to the embodiment of the present disclosure, and the communication device 1500 may implement corresponding processes implemented by the first communication device in each method according to the embodiment of the present disclosure, and will not be described herein for the sake of brevity.

In an implementation, the communication device 1500 may be the second communication device according to the embodiment of the present disclosure, and the communication device 1500 may implement the corresponding processes implemented by the second communication device in each method according to the embodiment of the present disclosure, and the description thereof will not be repeated here for the sake of simplicity.

FIG. 16 is a schematic structural diagram of a chip 1600 according to an embodiment of the present disclosure. The chip 1600 includes a processor 1610, which can call and run a computer program from a memory to implement the method in the embodiment of the present disclosure.

In an implementation, the chip 1600 may further include a memory 1620. Among them, the processor 1610 may call and run a computer program from the memory 1620 to implement a method executed by the first communication device or the second communication device in the embodiment of the present disclosure.

The memory 1620 may be a separate device independent of the processor 1610 or may be integrated into the processor 1610.

In an implementation, the chip 1600 may further include an input interface 1630. The processor 1610 may control the input interface 1630 to communicate with other devices or chips, specifically, may acquire information or data transmitted by other devices or chips.

In an implementation, the chip 1600 may further include an output interface 1640. Among them, the processor 1610 may control the output interface 1640 to communicate with other devices or chips, specifically, may output information or data to other devices or chips.

In an implementation, the chip can be applied to the first communication device in the embodiment of the present disclosure, and the chip can implement corresponding processes implemented by the first communication device in each method of the embodiment of the present disclosure, and will not be repeatedly described here for the sake of simplicity.

In an implementation, the chip can be applied to the second communication device in the embodiment of the present disclosure, and the chip can implement corresponding processes implemented by the second communication device in each method of the embodiment of the present disclosure, and will not be repeatedly described here for the sake of simplicity.

The chips applied to the first communication device and the second communication device may be the same chip or different chips.

It should be understood that the chip mentioned in the embodiments of the present disclosure may also be referred to as a system-on-chip, a system chip, a chip system, or an on-chip system chip.

The processor mentioned above may be a general-purpose processor, a DSP, an FPGA, an ASIC, or other programmable logic device, a transistor logic device, a discrete hardware component, or the like. Among them, the general-purpose processor mentioned above may be a microprocessor or any conventional processor or the like.

The memory mentioned above may be a volatile memory or a non-volatile memory, or may include both volatile and non-volatile memory. The non-volatile memory may be a ROM, a PROM, an EPROM, an EEPROM, or a flash memory. The volatile memory may be a RAM.

It should be understood that the above-described memory is illustrative but not limiting, and for example, the memory in the embodiments of the present disclosure may also be a SRAM, a DRAM, a SDRAM, a DDR SDRAM, an ESDRAM, a SLDRAM, a DR RAM, or the like. That is, the memory in the embodiments of the present disclosure is intended to include, but is not limited to, these and any other suitable type of memory.

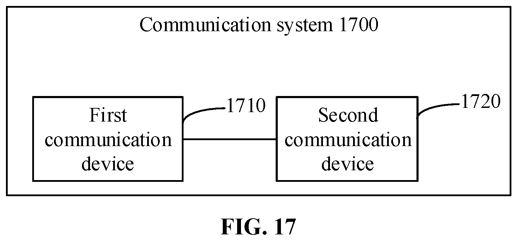

FIG. 17 is a schematic block diagram of a communication system 1700 according to an embodiment of the present disclosure. The communication system 1700 includes a first communication device 1710 and a second communication device 1720.

The first communication device 1710 is configured to: receive first information, where the first information indicates one or more pieces of first key information including information required for key updating of the first communication device; and determine a key updating manner based on the first information.

The second communication device 1720 is configured to transmit the first information.

The first communication device 1710 may be used to implement the corresponding functions implemented by the first communication device in the above-described methods, and the second communication device 1720 may be used to implement the corresponding functions implemented by the second communication device in the above-described methods. For the sake of brevity, it will not be repeated here.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed by a computer, the processes or functions according to the embodiments of the present disclosure are generated in whole or in part. The computer may be a general-purpose computer, a special-purpose computer, a computer network, or other programmable devices. The computer instructions may be stored in a computer-readable storage medium or transmitted from one computer-readable storage medium to another computer-readable storage medium, for example, the computer instructions may be transmitted from one website site, computer, server, or data center via wired (e.g., coaxial cable, optical fiber, digital subscriber line (DSL)) or wireless (e.g., infrared, wireless, microwave, etc.) means to another website site, computer, server, or data center. The computer-readable storage medium may be any available medium accessible by a computer or a data storage device such as a server, a data center, or the like that integrates one or more available media. The available medium may be a magnetic medium (e.g., a floppy disk, a hard disk, a magnetic tape), an optical medium (e.g., a DVD), or a semiconductor medium (e.g., a solid state drive (SSD)), etc.

It should be understood that in various embodiments of the present disclosure, the sequence numbers of the above-described processes do not mean the sequence of execution, and the execution sequence of each process should be determined by its function and internal logic, and should not constitute any limitation on the implementation of the embodiments of the present disclosure.

Those skilled in the art can clearly understand that for convenience and conciseness of the description, the specific working processes of the systems, devices, and units described above may refer to the corresponding processes in the aforementioned method embodiments, and will not be repeatedly described herein.

The above is merely a specific embodiment of the present disclosure, but the scope of protection of the present disclosure is not limited thereto. Any changes or substitutions that can be easily conceived by those skilled in the art within the technical scope disclosed in the present disclosure should be included within the scope of protection of the present disclosure. Therefore, the scope of protection of the present disclosure should be based on the scope of protection of the claims.

## Claims

1. A method for key updating, comprising:
receiving, by a first communication device, first information, wherein the first information indicates one or more pieces of first key information including information required for key updating of the first communication device; and
determining, by the first communication device, a key updating manner based on the first information.

2. The method of claim 1, wherein the one or more pieces of first key information comprise information required for the first communication device to perform key updating during continuous switching.

3. The method of claim 1 or 2, wherein the key updating manner comprises at least one of the following:
performing vertical key derivation in a case where the first information includes new security information and/or information instructing to perform vertical key derivation; or
performing horizontal key derivation in at least one of the following cases:
the first information does not comprise security information;
the first information comprises information instructing to perform horizontal key derivation; or
security information indicated by the first information is the same as security information currently used by the first communication device.

4. The method of claim 1 or 2, wherein the key updating manner comprises: performing horizontal key derivation or vertical key derivation by default after receiving the first information.

5. The method of claim 4, wherein the method further comprises:
acquiring new security information for next key updating after the first communication device successfully accesses a target communication device.

6. The method of claim 4 or 5, wherein performing the horizontal key derivation by default after receiving the first information comprises:
performing the horizontal key derivation when it is determined that an inter-control unit (inter-CU) layer 1 or layer 2 triggered mobility (LTM) is to be performed after receiving the first information.

7. The method of any one of claims 1 to 6, wherein the first information is an LTM cell switch command.

8. The method of any one of claims 1 to 7, wherein the first key information comprises at least one of the following:
a key associated with a target communication device and/or a second communication device;
an index of the key associated with the target communication device and/or the second communication device;
an identifier of a control unit of the second communication device;
an identifier of the target communication device;
an identifier of a candidate cell;
one or more pieces of security information;
security algorithm information;
whether a key needs to be updated;
tamper-proof information; or
encrypted information.

9. The method of any one of claims 1 to 8, wherein the first information includes tamper-proof information and/or encrypted information.

10. The method of any one of claims 1 to 8, wherein the first information is integrity-protected and/or encrypted.

11. The method of claim 10, wherein one of the following applies:
the first information is processed according to a medium access control (MAC) layer encryption algorithm and/or an integrity protection algorithm; or
the first information is first transmitted to a packet data convergence protocol (PDCP) layer through a MAC control element (CE) to perform at least one of encryption, integrity protection, decryption, or integrity verification, and then is transmitted to the MAC layer.

12. The method of any one of claims 1 to 11, wherein the one or more pieces of first key information is used to determine a target key associated with a target communication device and/or a second communication device.

13. The method of claim 12, wherein the target key comprises at least one of the following:
a next hop key (NH);
a key of the second communication device K_{gNB};
a control plane security protection key K_{RRCenc}; or
a user plane security protection key K_{UPenc}.

14. A method for key updating, comprising:
transmitting, by a second communication device, first information, wherein the first information indicates one or more pieces of first key information including information required for key updating of a first communication device.

15. The method of claim 14, wherein the one or more pieces of first key information comprise information required for the first communication device to perform key updating during continuous switching.

16. The method of claim 14 or 15, wherein the method further comprises:
in a case where a target communication device does not belong to the second communication device, requesting, by the second communication device, from the target communication device whether to perform horizontal key derivation or vertical key derivation before transmitting the first information.

17. The method of claim 14 or 15, wherein transmitting, by the second communication device, the first information comprises:
transmitting, by the second communication device, the first information to the first communication device when the second communication device has unused security information, wherein the first information carries the unused security information.

18. The method of claim 17, wherein the method further comprises:
transmitting, by the second communication device, request information to a target communication device, wherein the request information is used to instruct the target communication device to request new security information from a third communication device; or
transmitting, by the second communication device, new security information to a target communication device.

19. The method of claim 14 or 15, wherein transmitting, by the second communication device, the first information further comprises:
transmitting, by the second communication device, the first information to the first communication device when the second communication device does not have unused security information; and
instructing a target communication device to perform horizontal key derivation or indicating to the target communication device a generated target key of the target communication device when used security information is included or security information is not included in the first information.

20. The method of any one of claims 14 to 19, wherein the first information is a layer 1 or layer 2 triggered mobility (LTM) cell switch command.

21. The method of claim 20, wherein the LTM cell switch command comprises key derivation indication information for instructing the first communication device to perform horizontal key derivation or vertical key derivation.

22. The method of claim 20, wherein the method further comprises:
saving, by the second communication device, a plurality of pieces of security information for inter-control unit (inter-CU) LTM.

23. The method of claim 20, wherein the method further comprises at least one of the following:
in the case of performing an inter-CU LTM handover, the second communication device decides to perform horizontal key derivation or vertical key derivation; or
in the presence of unused security information, the second communication device decides to perform vertical key derivation.

24. The method of claim 23, wherein the method further comprises:
sequentially selecting, by the second communication device, unused security information from a security information list to perform vertical key derivation when it is decided to perform vertical key derivation; and
transmitting a generated target key and the unused security information to a target communication device.

25. The method of any one of claims 14 to 24, wherein the first key information comprises at least one of the following:
a key associated with a target communication device and/or the second communication device;
an index of the key associated with the target communication device and/or the second communication device;
an identifier of a control unit of the second communication device;
an identifier of the target communication device;
one or more pieces of security information;
security algorithm information;
whether a key needs to be updated;
tamper-proof information; or
encrypted information.

26. The method of any one of claims 14 to 25, wherein the first information comprises tamper-proof information and/or encrypted information.

27. The method of any one of claims 14 to 25, wherein the first information is integrity-protected and/or encrypted.

28. The method of claim 27, wherein one of the following applies:
the first information is processed according to a medium access control (MAC) layer encryption algorithm and/or an integrity protection algorithm; or
the first information is first transmitted to a packet data convergence protocol (PDCP) layer through a MAC control element (CE) to perform at least one of encryption, integrity protection, decryption, or integrity verification, and then is transmitted to the MAC layer.

29. The method of any one of claims 14 to 28, wherein the one or more pieces of first key information is used to determine a target key associated with a target communication device/ second communication device.

30. The method of claim 29, wherein the target key comprises at least one of the following:
a next hop key (NH);
a key of the second communication device K_{gNB};
a control plane security protection key K_{RRCenc}; or
a user plane security protection key K_{UPenc}.

31. A first communication device, comprising:
a receiving unit, configured to receive first information, wherein the first indication information indicates one or more pieces of first key information including information required for key updating of the first communication device; and
a processing unit, configured to determine a key updating manner based on the first information.

32. The first communication device of claim 31, wherein the one or more pieces of first key information include information required for the first communication device to perform key updating during continuous switching.

33. The first communication device of claim 31 or 32, wherein the key updating manner performed by the processing unit comprises at least one of the following:
performing vertical key derivation in a case where the first information includes new security information and/or information instructing to perform vertical key derivation; or
performing horizontal key derivation in at least one of the following cases:
the first information does not include security information;
the first information includes information instructing to perform horizontal key derivation; or
security information indicated by the first information is the same as security information currently used by the first communication device.

34. The first communication device of claim 31 or 32, wherein the key updating manner performed by the processing unit comprises: performing horizontal key derivation or vertical key derivation by default after receiving the first information.

35. The first communication device of claim 34, wherein the processing unit is further configured to acquire new security information for next key updating after successfully accessing the target communication device.

36. The first communication device of claim 34 or 35, wherein the processing unit performs the horizontal key derivation by default after receiving the first information comprises:
performing the horizontal key derivation when it is determined that an inter-control unit (inter-CU) layer 1 or layer 2 triggered mobility (LTM) is to be performed after receiving the first information.

37. A second communication device, comprising:
a transmission unit, configured to transmit first information, wherein the first information indicates one or more pieces of first key information including information required for key updating of a first communication device.

38. The second communication device of claim 37, wherein the one or more pieces of first key information comprise information required for the first communication device to perform key updating during continuous switching.

39. The second communication device of claim 37 or 38, wherein the second communication device further comprises:
a processing unit, configured to request from a target communication device whether to perform horizontal key derivation or vertical key derivation before transmitting the first information in a case where the target communication device does not belong to the second communication device.

40. The second communication device of claim 37 or 38, wherein the transmission unit is configured to:
transmit the first information to the first communication device when the second communication device has unused security information, wherein the first information carries the unused security information.

41. The second communication device of claim 40, wherein the transmission unit is further configured to:
transmit request information to a target communication device, wherein the request information is used to instruct the target communication device to request new security information from a third communication device; or
transmit new security information to a target communication device.

42. The second communication device of claim 37 or 38, wherein the transmission unit is further configured to:
transmit the first information to the first communication device when the second communication device does not have unused security information; and
instruct a target communication device to perform horizontal key derivation or indicate to the target communication device a generated target key of the target communication device when used security information is included or security information is not included in the first information.

43. The second communication device of any one of claims 37 to 42, wherein the first information is a layer 1 or layer 2 triggered mobility (LTM) cell switch command.

44. The second communication device of claim 43, wherein the LTM cell switch command comprises key derivation indication information for instructing the first communication device to perform horizontal key derivation or vertical key derivation.

45. The second communication device of claim 43, wherein the processing unit is further configured to save a plurality of pieces of security information for inter-control unit (inter-CU) LTM.

46. The second communication device of claim 43, wherein the processing unit is further configured to perform at least one of the following:
in the case of performing an inter-CU LTM handover, deciding to perform horizontal key derivation or vertical key derivation; or
in the presence of unused security information, deciding to perform vertical key derivation.

47. The second communication device of claim 46, wherein the processing unit is further configured to sequentially select unused security information from a security information list to perform vertical key derivation when it is decided to perform vertical key derivation, and transmit a generated target key and unused security information to a target communication device.

48. A first communication device, comprising:
a transceiver;
a processor; and
a memory for storing a computer program,
wherein the transceiver is configured to communicate with other devices, and the processor is configured to call and execute the computer program stored in the memory to cause the first communication device to perform the method of any one of claims 1 to 13.

49. A second communication device, comprising:
a transceiver;
a processor; and
a memory for storing a computer program,
wherein the transceiver is configured to communicate with other devices, and the processor is configured to call and execute the computer program stored in the memory to cause the second communication device to perform the method of any one of claims 14 to 30.
